Europäisches Patentamt

(19) European Patent Office    (11) Publication number: **0 136 269**

Office européen des brevets    **B1**

(12)    EUROPEAN PATENT SPECIFICATION

(45) Date of publication of patent specification: **25.01.89**    (51) Int. Cl.⁴: **B 60 G 21/04**

(21) Application number: **84830252.7**

(22) Date of filing: **17.09.84**

(54) Improvements in suspension systems for motor vehicles.

(30) Priority: **19.09.83 IT 6796483**

(43) Date of publication of application:
**03.04.85 Bulletin 85/14**

(45) Publication of the grant of the patent:
**25.01.89 Bulletin 89/04**

(84) Designated Contracting States:
**DE FR GB IT SE**

(56) References cited:
**DE-A- 649 223**
**US-A-2 919 126**
**US-A-3 071 366**

(73) Proprietor: **FIAT AUTO S.p.A.**
**Corso Giovanni Agnelli 200**
**I-10135 Torino (IT)**
(73) Proprietor: **Teksid S.p.A.**
**Via Pianezza 123**
**I-10151 Torino (IT)**

(72) Inventor: **May, Pier Luigi**
**Via Ruggero di Lauria, 3**
**I-20149 Milano (IT)**

(74) Representative: **Notaro, Giancarlo et al**
**c/o Jacobacci-Casetta & Perani S.p.A. Via Alfieri,**
**17**
**I-10121 Torino (IT)**

Courier Press, Leamington Spa, England.

## Description

The present invention relates to motor vehicle suspension systems, of the type indicated in the preamble of the attached Claim 1. A suspension of this type is known from US—A—3,071,366.

In such known solution, the bolts connecting the transverse bar to the longitudinal arms generate discontinuous stresses in the transverse bar.

The aim of the present invention is to create a suspension system which has a structure which is simpler and more reliable.

In order to achieve this object, the invention provides a suspension system as defined in the preamble and the characterising portion of the attached Claim 1.

The invention can be advantageously applied particularly to suspension systems in which the transverse bar is connected to the central portions of the longitudinal arms.

In the suspension of the invention, the transverse bar has the properties of flexural rigidity and torsional flexibility needed for the suspension to function properly and, at the same time, each end of the bar is locked correctly to the respective longitudinal arm without generating discontinuousl stresses in the bar itself.

Further characteristics and advantages of the present invention will become apparent from the description which follows with reference to the appended drawings, supplied purely by way of non-limiting example, in which:

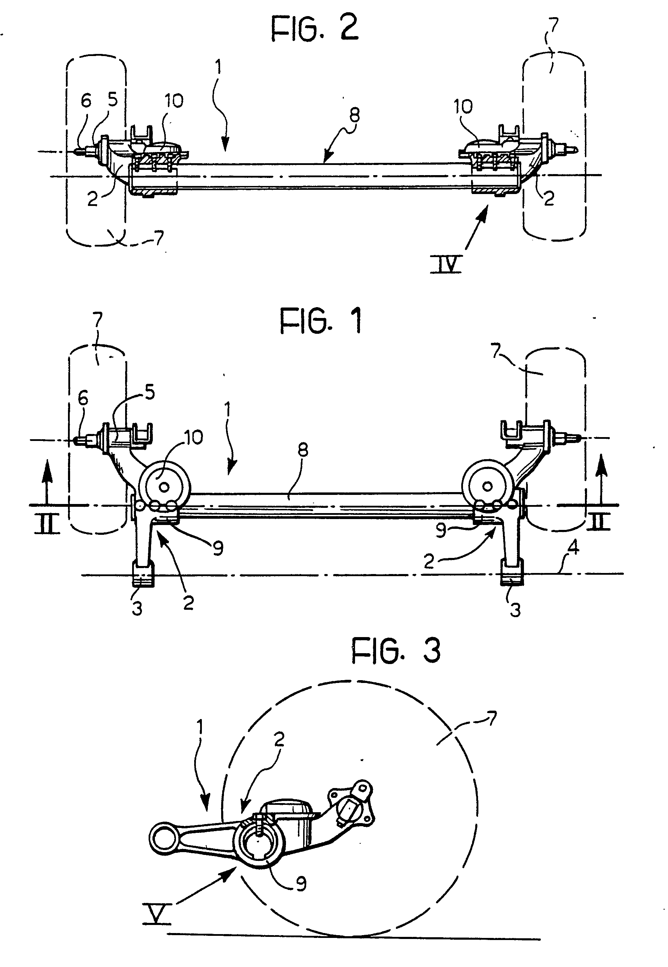

Figure 1 is a schematic plan view of a suspension system according to the invention,

Figure 2 is a section taken on line II of Figure 1,

Figure 3 is a side view of the suspension system of Figures 1 and 2,

Figure 4 shows, on an enlarged scale, a detail of Figure 2, and

Figure 5 is a section taken on arrow V of Figure 3.

In the drawings, reference numeral 1 generally indicates a rear suspension system for a motor vehicle with front-wheel drive.

The suspension system 1 includes a pair of longitudinal arms 2 each of which has one end 3 articulated to the body of the motor vehicle (not illustrated) about a transverse axis 4, and one end 5 furnished with a bearing 6 for a wheel 7 (illustrated in broken outline in the drawings).

In the present description and in the following claims, the term "longitudinal" is used with reference to a direction parallel to the direction of forward movement of a motor vehicle, and the term "transverse" is used to mean a horizontal direction perpendicular to the said longitudinal direction.

The longitudinal arms 2 can be made, in known manner, either by casting (from cast iron or light alloy) or by pressing (from steel or light alloy).

The suspension system 1 also includes a transverse torsion bar 8 rigidly fixed at each end to a central part 9 of the respective longitudinal arm 2. Each longitudinal arm 2 also has a zone 10 for supporting a spring and a shock absorber which form part of the suspension.

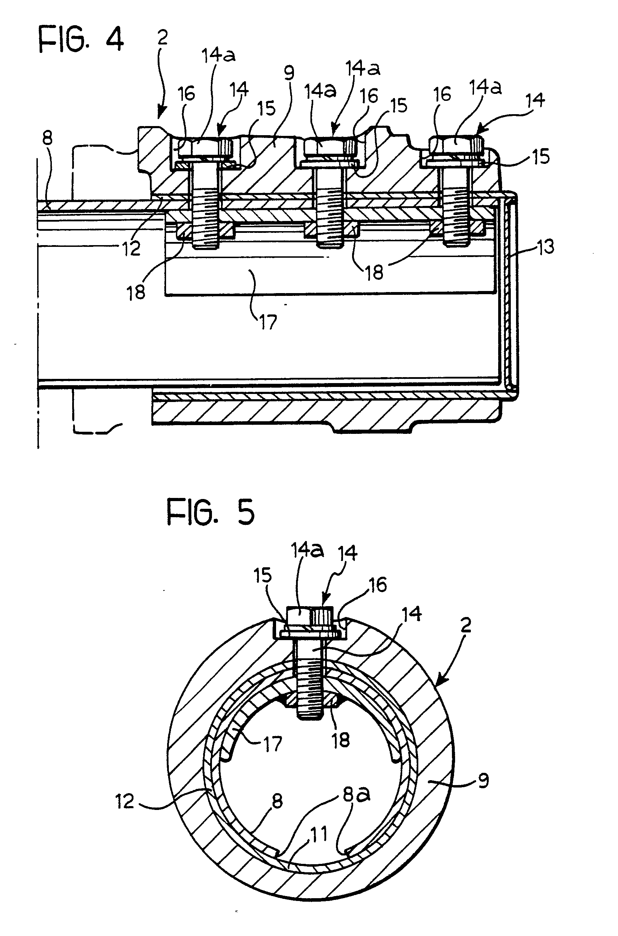

The transverse bar 8 consists of a tubular component, for example of light alloy, having a substantially-circular open section (see Figure 5). The two longitudinal edges of the bar 8 defining the aperture therein extend the entire length of the bar and are indicated 8a. When the bar is assembled in a motor vehicle, the said aperture in the bar faces downwardly.

As illustrated in detail in Figures 4 and 5, each end of the transverse bar 8 is fitted into a cylindrical seat 11 in the respective longitudinal arm 2, preferably with the interposition of a metal tube 12 closed at its outer end by a disc 13. In the embodiment illustrated, each end of the transverse bar 8 is locked in its seat 11 by three radially extending bolts 14. Each bolt 14 has a head 14a bearing, with the interposition of a washer 15, on the bottom of a respective seat 16 formed in the external surface of the longitudinal arm 2. Each bolt 14 passes through the wall of the longitudinal arm 2 defining the seat 11, the tube 12 and the transverse bar 8, at a point on the latter which is diametrally opposite the aperture in the bar itself.

Within each end of the transverse bar 8 there is a locking element 17. To the internal surface of this element are welded three nuts 18 which are engaged by the bolts 14 so as to press the locking element 17 against the internal surface of the bar 8 so as to lock the latter in its seat.

The locking element may extend through any angle but preferably extends through about 180°, as in the case illustrated in the drawings.

The cross section of the element 17 is crescent-shaped and has a thickness which diminishes progressively from its centre towards its ends (see Figure 5).

Thus the bar is locked securely in its seat in the respective longitudinal arm without discontinuous stresses being generated in the bar.

Whilst the motor vehicle is in motion, oscillations of the wheels 7 about the transverse axis 4 are permitted by the movements of the longitudinal arms 2 which cause the transverse bar 8 to bend and twist.

The structure of the transverse bar described above allows the torsional and flexional characteristics of the bar to be varied during the design stage by variation of three parameters: the diameter of the bar, its thickness and the width of the aperture; allowing its use in various applications in the field of motor vehicles and light vehicles.

## Claims

1. Suspension system for motor vehicles, including:

a pair of longitudinal arms (2), each of which is articulated at one end (3) to the body of the motor vehicle about a transverse axis (4), and at its opposite end (5) has a bearing (6) for a respective wheel (7), each longitudinal arm (2) also having attachment means for a spring and a shock absorber, and

a transverse bar (8) rigidly fixed at its ends to the two longitudinal arms (2), and constituted by a tubular component with a substantially-circular open cross-section which is fixed at each end in a cooperating seat (11) in the respective longitudinal arm (2) by means of a series of radial bolts (14) which engage that zone of the transverse bar (8) diametrally opposite the aperture in the bar itself, characterised in that within each end of the transverse bar (8), there is a locking element (17) provided with a series of nuts (18) which are engaged by the said fixing bolts (14), the locking element (17) having a crescent-shaped cross-section the thickness whereof decreases progressively circumferentially from its centre towards its ends.

2. Suspension system according to Claim 1, characterised in that the locking element (17) extends through an angle of about 180°.

3. Suspension system according to Claim 1, characterised in that the axes of the fixing bolts (14) lie in the same radial plane which intersects the locking element (17) centrally.

4. Suspension system according to Claim 3, characterised in that, when fitted in a motor vehicle, that part of the transverse bar (8) which is engaged by the fixing bolts (14) is uppermost.

## Patentansprüche

1. Aufhängungssystem für Motorfahrzeuge, enthaltend:

ein Paar Längsarme (2), die jeweils am einen Ende (3) am Motorfahrzeugkörper um eine Querachse (4) gelenkig angebracht sind und an ihrem anderen Ende (5) ein Lager (6) für ein entsprechendes Rad (7) aufweisen, wobei jeder Längsarm (2) auch eine Befestigungseinrichtung für eine Feder und einen Stoßdämpfer aufweist, und

eine Querstange (8), die an ihren Enden starr mit den zwei Längsarmen (2) verbunden ist und von einem tubusförmigen Element mit einem im wesentlichen kreisförmigen, offenen Querschnitt gebildet ist, das an jedem Ende in einem damit zusammenwirkenden Sitz (11) in dem entsprechenden Längsarm (2) mittels einer Reihe radialer Bolzen (14) befestigt ist, die an jenem Bereich der Querstange (8) anliegen, der diametral der Öffnung in der Stange selbst gegenüberliegt, dadurch gekennzeichnet, daß in jedem Ende der Querstange (8) ein Verriegelungselement (17) angeordnet ist, das mit einer Reihe von Muttern (18) versehen ist, in die die Befestigungsbolzen (14) eingeschraubt sind, wobei das Verriegelungselement (17) einen halbmondförmigen Querschnitt aufweist, dessen Dicke progressiv in Umfangsrichtung von seiner Mitte gegen seine Enden abnimmt.

2. Aufhängungssystem nach Anspruch 1, dadurch gekennzeichnet, daß das Verriegelungselement (17) sich über einen Winkel von etwa 180° erstreckt.

3. Aufhängungssystem nach Anspruch 1, dadurch gekennzeichnet, daß die Achsen der Befestigungsbolzen (14) in der gleichen radialen Ebene liegen, die das Verriegelungselement (17) zentral schneidet.

4. Aufhängungssystem nach Anspruch 3, dadurch gekennzeichnet, daß, wenn en einem Motorfahrzeug angebracht, jener Teil der Querstange (8), an dem die Befestigungsbolzen (14) anliegen, zuoberst liegt.

## Revendications

1. Système de suspension pour véhicules à moteur, comprenant une paire de bras longitudinaux (2) dont chacun est monté de façon articulée à une extrémité (3) sur la caisse du véhicule à moteur, autour d'un axe transversal (4), et présente à son extrémité opposée (5) une fusée (6) pour une roue (7) associée, chaque bras longitudinal (2) comportant aussi des moyens de fixation pour un ressort et un amortisseur, et une barre transversale (8) fixée à demeure à ses extrémités sur les deux bras longitudinaux (2) et constituée par un élément tubulaire à section transversale ouverte sensiblement circulaire qui est fixé à chaque extrémité dans un siège coopérant (11) ménagé dans le bras longitudinal associé (2) à l'aide d'une série de boulons radiaux (14) qui s'engagent dans la zone de la barre transversale (8) qui est diamétralement opposée à l'ouverture ménagée dans la barre elle-même, caractérisé en ce que, à l'intérieur de chaque extrémité de la barre transversale (8), il est prévu un élément de verrouillage (17) comportant une série d'écrous (18) dans lesquels se vissent les boulons de fixation (14), cet élément de verrouillage (17) offrant une section transversale en forme de croissant et dont l'épaisseur décroît de manière progressive dans le sens circonférenciel de son centre vers ses extrémités.

2. Système de suspension suivant la revendication 1, caractérisé en que l'élément de verrouillage (17) s'étend sur un angle d'environ 180°.

3. Système de suspension suivant la revendication 1, caractérisé en ce que les axes des boulons de fixation (14) se trouvent dans le même plan radial qui recoupe l'élément de verrouillage (17) en position médiane.

4. Système de suspension suivant la revendication 3, caractérisé en ce que, lorsqu'il est monté dans un véhicule à moteur, la partie de la barre transversale (8) dans laquelle s'engagent les boulons de fixation (14) est celle située au plus haut.

FIG. 2

FIG. 1

FIG. 3

FIG. 4

FIG. 5